# EUROPEAN PATENT SPECIFICATION

(11) **EP 1 643 628 B1**
(45) Date of publication and mention of the grant of the patent: **29.10.2008**
(21) Application number: 05021158.0
(22) Date of filing: 28.09.2005
(51) Int. Cl.: H02N 1/00

(54) **Methods of manufacturing an electrostatic motor**
Herstellungsverfahren eines elektrostatischen Mikromotors
Méthodes de production d'un moteur électrostatique

(30) Priority: 29.09.2004 JP 2004284386
(43) Date of publication of application: 05.04.2006
(73) Proprietor: FANUC LTD, Minamitsuru-gun, Yamanashi 401-0597 (JP)
(72) Inventor: Odaka, Shunichi, Fanuc Dai3virakaramatsu, Minamitsuru-gun Yamanashi 401-0511 (JP); Kariya, Isao, Room 6-303 Fanuc Dai3virakaramatsu, Minamitsuru-gun Yamanashi 401-0511 (JP)
(74) Representative: Schmidt, Steffen J.

(56) References cited:
- US-A- 3 414 742
- US-A- 4 258 468
- US-A1- 2003 201 258
- US-B1- 6 521 844
- US-B1- 6 699 395
- PATENT ABSTRACTS OF JAPAN vol. 1996, no. 10, 31 October 1996 (1996-10-31) -& JP 08 149858 A (KANAGAWA KAGAKU GIJUTSU AKAD), 7 June 1996 (1996-06-07)
- FRAZIER A B: "Uses of polyimide for micromachining applications" INDUSTRIAL ELECTRONICS, CONTROL AND INSTRUMENTATION, 1994. IECON '94., 20TH INTERNATIONAL CONFERENCE ON BOLOGNA, ITALY 5-9 SEPT. 1994, NEW YORK, NY, USA,IEEE, vol. 3, 5 September 1994 (1994-09-05), pages 1483-1487, XP010137601 ISBN: 0-7803-1328-3
- GAO R X ET AL: "MINIATURIZED SURFACE-DRIVEN ELECTROSTATIC ACTUATORS: DESIGN AND PERFORMANCE EVALUATION" IEEE / ASME TRANSACTIONS ON MECHATRONICS, IEEE SERVICE CENTER, PISCATAWAY, NJ, US, vol. 2, no. 1, March 1997 (1997-03), pages 1-7, XP000688558 ISSN: 1083-4435
- FRIEDRICH C R ET AL: "MICROMECHATRONICS AND THE MINIATURIZATION OF STRUCTURES, DEVICES, AND SYSTEMS" IEEE TRANSACTIONS ON COMPONENTS, PACKAGING AND MANUFACTURING TECHNOLOGY. PART C: MANUFACTURING, IEEE SERVICE CENTER, PISCATAWAY, NJ, US, vol. 20, no. 1, January 1997 (1997-01), pages 31-38, XP000656235 ISSN: 1083-4400
- MINORU SAKATA ET AL: "AN ELECTROSTATIC TOP MOTOR AND ITS CHARACTERISTICS" SENSORS AND ACTUATORS A, ELSEVIER SEQUOIA S.A., LAUSANNE, CH, vol. A21, no. 1 / 3, 1 February 1990 (1990-02-01), pages 168-172, XP000149579 ISSN: 0924-4247

## Description

### BACKGROUND OF THE INVENTION

### 1. Field of the Invention

The present invention relates to an electrostatic motor. The present invention also relates to a method of manufacturing an electrostatic motor.

### 2. Description of the Related Art

An electrostatic motor including a stationary member having a plurality of electrodes disposed on one surface of an insulating substrate at regular intervals, a movable member having a plurality of electrodes disposed on one surface of another insulating substrate at regular intervals identical to the intervals of the electrodes of the stationary member, a first support member for supporting the stationary member in a fixed manner, and a second support member for supporting the movable member in a manner movable relative to the stationary member, is known. An electrostatic motor of this type is configured such that the stationary member is assembled to the movable member with the plurality of electrodes (generally strip-shaped or line-shaped electrodes) thereof properly opposing to each other, and that, by, e.g., applying three-phase alternating electric voltage to three electrodes, arranged side-by-side, in the respective sets of electrodes of the members, so as to alternately generate positive and negative electrostatic forces between the opposing electrodes, whereby a driving force is produced on the movable member in a direction of the row of the electrodes. In this connection, a laminated configuration is also known, in which the stationary members and the movable members are alternately stacked to provide several sets of stationary member and movable member, each set having opposing electrodes, in order to increase the net power of the motor.

In the above type of electrostatic motor, in order to increase output power and to improve efficiency, it is important to assemble the stationary member and the movable member in an accurately aligned or positioned state relative to each other such that the surface area of the mutually opposing regions (hereinafter referred to as an "opposing area") of the respective sets of electrodes is maximized for individual electrodes. In particular, in the laminated-type electrostatic motor, both the stationary members and the movable members generally have thin film-shaped insulating substrates, so that it is required to provide a support mechanism capable of stably supporting the stationary and movable members in the accurately aligned state relative to each other.

For example, in a linear-type electrostatic motor in which a movable member (or a translation member) linearly moves relative to a stationary member, it is required to support the movable member in a guidable manner relative to the stationary member using a high-precision linear guide, in a condition where the set of electrodes of the stationary member and the set of electrodes of the movable member, each formed in a parallel arrangement, are accurately positioned in parallel to and properly opposing to each other so as to maximize the opposing area. Also, in a rotary-type electrostatic motor in which a movable member (or a rotor) rotates about an axis relative to a stationary member, it is required to support the movable member in a coaxial manner relative to the stationary member using a high-precision bearing, in a condition where the set of electrodes of the stationary member and the set of electrodes of the movable member, each formed in a radial arrangement, are accurately positioned coaxial to and properly opposing to each other so as to maximize the opposing area.

The stationary member and the movable member of the above-described electrostatic motor can be manufactured using the process for manufacturing a printed circuit board. More specifically, an insulating substrate (or a copper-clad laminate) with a copper foil laminated on the surface of the substrate is provided; a photosensitive resist layer is formed on the copper foil of the insulating substrate; a printing film provided with a diagram of an electrode pattern of the stationary member or the movable member is superimposed on the resist layer and is exposed for patterning; and an unnecessary portion of the copper foil is removed by etching in an exposed pattern, so as to produce a set of electrodes aligned in a predetermined pattern. Thereafter, an electrically insulating layer is formed so as to entirely cover the exposed surface of the insulating substrate and the electrodes.

In the above-described manufacturing process of the stationary and movable members, a plurality of through-holes may be formed, for respectively mounting the stationary and movable members onto the first and second support members, in the respective insulating substrates before patterning or after etching, by a machining process using a punch or drill, etc. On the other hand, a plurality of upright positioning pins are fixedly provided at predetermined positions on the first and second support members, respectively. The positioning pins are fitted into the corresponding through-holes, so that the stationary and movable members are fixedly mounted respectively to the first and second support members in a state positioned at respective predetermined locations. In this connection, Japanese Unexamined Patent Publication (Kokai) No. 8-149858 (JP-A-8-149858) discloses a rotary-type electrostatic motor that includes a stationary member having a plurality of through-holes for positioning purpose and a support member having a plurality of positioning pins adapted to be fitted into the respective through-holes.

In the above-described method in which the through-holes for positioning are formed in the stationary or movable member by a machining process, the following steps are generally performed; marks are provided to the insulating substrate by, e.g., printing at predetermined drilled locations, each mark is recognized using a vision sensor such as a CCD (charge coupled device) camera, and a drilling step is performed using a machine tool, such as a drilling or press machine, in a state where a tool, such as a drill or punch is accurately opposing to the recognized mark. In this machining process, there are factors such as a positional error in the mark on the insulating substrate, a positional error in the tool on a tool holder of the machine tool, the wear of a tool edge, the low precision of a feeding operation in the machine tool, the deformation of the insulating substrate during processing, etc., which deteriorate the accuracy of the positions of the through-holes and hence the positioning accuracy of the stationary or movable member.

For example, in a rotary-type electrostatic motor, there may be a case where a stationary member and a movable member (or a rotor) are assembled with each other with the center points of the respective sets of radial electrodes being mutually deviated in a radial direction, due to the positional error in the through-holes for positioning purpose formed in the stationary and movable members. In this case, it is concerned that the opposing area of the respective electrodes of the stationary and movable members is decreased and thereby a torque is reduced. Moreover, depending upon the correlation between the pitch and the deviation distance of the radial electrodes, it is also concerned that both the electrostatic forces in a positive direction (i.e., torque) and in a negative direction (i.e., braking force) may be generated, corresponding to the circumferential locations of the respective electrodes. On the other hand, in a linear-type electrostatic motor, there may be a case where a stationary member and a movable member (or a translating member) are assembled with each other with the respective sets of parallel electrodes being mutually deviated in a rotational direction such as to obliquely intersect with each other, due to the positional error in the through-holes for positioning purpose formed in the stationary and movable members. In this case, it is concerned that the opposing area of the respective electrodes of the stationary and movable members is decreased and thereby the thrust is reduced. Moreover, depending upon the correlation between the pitch and the deviation angle of the parallel electrodes, it is also concerned that an electrostatic force (or torque), such as to further facilitate the positional error in the rotational direction, is generated at the opposite ends of the length of each electrode. A countermeasure, such that a high-precision machine tool for a drilling operation is used, to solve the above problems associated with a relative positional deviation between the stationary and movable members, may lead, together with the complicated manufacturing process, to a considerable increase in the manufacturing cost of the electrostatic motor.

JP 08149858A describes an electrostatic motor having pins for stator association including a stator having a polyphase structure disposed on one surface of an insulator, a rotator having a regular polyphase structure disposed on one surface of an insulator identical to the polyphase structure of the stator.

US 6,699,395 B1 describes a method of forming alignment features for conductive devices. A film resist that hardens when exposed to ultraviolet light is applied over a copper foil being applied to a substrate. A pattern is placed over the film resist defining outer boundaries of conductive paths as well as of mask features. Sections not covered by the pattern are exposed to ultraviolet light so as to harden such sections. Non-hardened sections of the dried film resist are then removed through a chemical process. Next, portions of the foil not covered by hardened film resist are removed by chemical etching to define the conductive paths and mask features. The mask features serve as a cutting template for the alignment features. A laser is used to ablate substrate material that is not in the shadow of the cutting template.

US 2003/0201258 A1 describes a method for producing a trench structure in a polymer substrate, comprising the steps of arranging a mask made of a material which reflects laser radiation, and guiding a laser beam over a boundary edge of a cutout of the mask such that an energy density of the laser beam which impinges on the polymer surface, at each point, lies above a threshold at which the substrate material is completely removed.

Frazier A.B. "Uses of Polyimide for Micromachining Applications", Industrial Electronics, Control and Instrumentation, vol. 3, 5 Sept. 1994, p. 1483-1487 describes a process of forming electroplating micromolds for a fabrication of metallic microstructures. The process comprises the steps of forming an optical mask on a surface of a photosensitive polyimide molding material, irradiating local regions of the photosensitive polyimide molding material through cutouts of the optical mask with UV light, and thereby removing the irradiated parts without substantially damaging said optical mask.

### SUMMARY OF THE INVENTION

It is an object of the present invention to provide methods of manufacturing an electrostatic motor, which do not require a high-precision machine tool, which permit a stationary member and a movable member to be accurately positioned relative to each other, and which facilitate a low-cost manufacturing of an electrostatic motor having high power output and high efficiency.

An example of an electrostatic motor having high power output and high efficiency, which can be manufactured at low cost by such a method is also provided.

In order to accomplish the above objects, the present invention provides a method of manufacturing an electrostatic motor according to claims 1 and 4; the electrostatic motor including a stationary member having a plurality of electrodes disposed on one surface of an insulating substrate at regular intervals, a movable member having a plurality of electrodes disposed on one surface of an insulating substrate at regular intervals identical to the intervals of the electrodes of the stationary member, a first support member for supporting the stationary member in a fixed manner, and a second support member for supporting the movable member in a manner movable relative to the stationary member; the method comprising the steps of forming a plurality of electrodes on one surface of an insulating substrate and, simultaneously therewith, locally forming a light interrupting mark having a predetermined contour on the surface independently of the plurality of electrodes, to produce at least one of the stationary member and the movable member; irradiating a local region of the insulating substrate adjacent to the light interrupting mark formed on the surface of the insulating substrate with a light, and thereby removing the local region along an edge of the light interrupting mark without substantially damaging the light interrupting mark, to provide a mounting recess in at least one of the stationary member and the movable member; and mounting at least one of the stationary member and the movable member onto at least one of the first support member and the second support member corresponding thereto, by using the mounting recess provided in at least one of the stationary member and the movable member.

In the above configuration, the step of producing at least one of the stationary member and the movable member may include the step of forming the plurality of electrodes and the light interrupting mark simultaneously with each other from a metal film provided on the surface of the insulating substrate through a patterning and an etching.

In a case where the light interrupting mark is formed from a material capable of reflecting a laser beam, the step of providing the mounting recess may include the step of irradiating the local region of the insulating substrate with the laser beam as the light and thereby thermally removing the local region.

In a case where the insulating substrate is made of a photosensitive material, the step of providing the mounting recess may include the step of exposing the local region of the insulating substrate to the light with the light interrupting mark being used as a mask and thereafter chemically removing the local region.

The step of producing at least one of the stationary member and the movable member may include the step of forming an insulation layer to cover the plurality of electrodes and the light interrupting mark, formed on the surface of the insulating substrate; and the step of providing the mounting recess may include the step of locally removing the insulation layer to correspond to the local region simultaneously with and in a manner identical to a removal of the local region.

### BRIEF DESCRIPTION OF THE DRAWINGS

The above and other objects, features and advantages of the present invention will become more apparent from the following description of preferred embodiments in connection with the accompanying drawings, wherein:
Fig. 1 is an exploded perspective view showing on behalf of the basic configuration of an electrostatic motor according to an example of the present invention;
Fig. 2 is a plan view showing a stationary member as one component of the electrostatic motor of Fig. 1;
Fig. 3 is a plan view showing a movable member as another component of the electrostatic motor of Fig. 1;
Figs. 4A to 4D are sectional views typically showing, respectively, the major steps of a manufacturing method, according to a first embodiment of the present invention, for manufacturing the electrostatic motor of Fig. 1;
Figs. 5A to 5C are perspective views typically showing, respectively, the major steps corresponding to the steps of Figs. 4A to 4C;
Fig. 6 is a view typically showing a modification of a laser-beam irradiation step in the manufacturing method of Fig. 4;
Fig. 7 is a view typically showing another modification of a laser-beam irradiation step in the manufacturing method of Fig. 4;
Figs. 8A to 8D are sectional views typically showing, respectively, the major steps of a manufacturing method, according to a second embodiment of the present invention, for manufacturing the electrostatic motor of Fig. 1;
Figs. 9A and 9B are views showing, respectively, various light interrupting marks which can be employed in a manufacturing method according to the present invention;
Fig. 10A is a view showing another light interrupting mark which can be employed in a manufacturing method according to the present invention;
Fig. 10B is a view showing a mounting recess formed by using the light interrupting mark of Fig. 10A;
Fig. 11A is a view showing still another light interrupting mark which can be employed in a manufacturing method according to the present invention, and a mounting recess formed by using the same;
Fig. 11B is a view typically showing a positioning pin capable of being fitted into the mounting recess of Fig. 11A;
Fig. 12A is a view showing another mounting recess which can be employed in an electrostatic motor according to an example of the present invention;
Fig. 12B is a view showing still another mounting recess which can be employed in an electrostatic motor according to an example of the present invention;
Fig. 12C is a view showing the mounting recess of Fig. 12B, which is formed by using a light interrupting mark of a different shape;
Fig. 13 is an exploded perspective view showing an electrostatic motor according to another example of the present invention, which is manufactured by a manufacturing method according to the present invention; and
Fig. 14 is a plan view showing a movable member as one component of the electrostatic motor of Fig. 13.

### DETAILED DESCRIPTION

The embodiments of the present invention are described below in detail, with reference to the accompanying drawings. In the drawings, the same or similar components are denoted by common reference numerals.

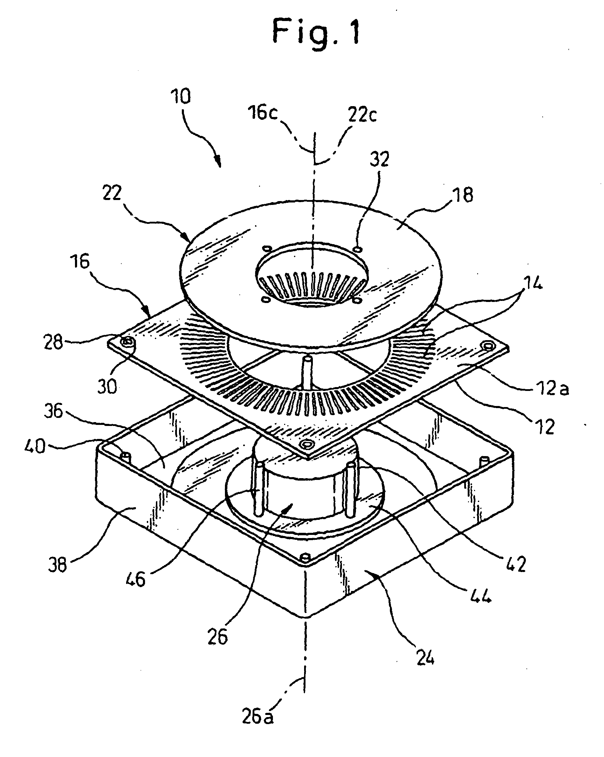

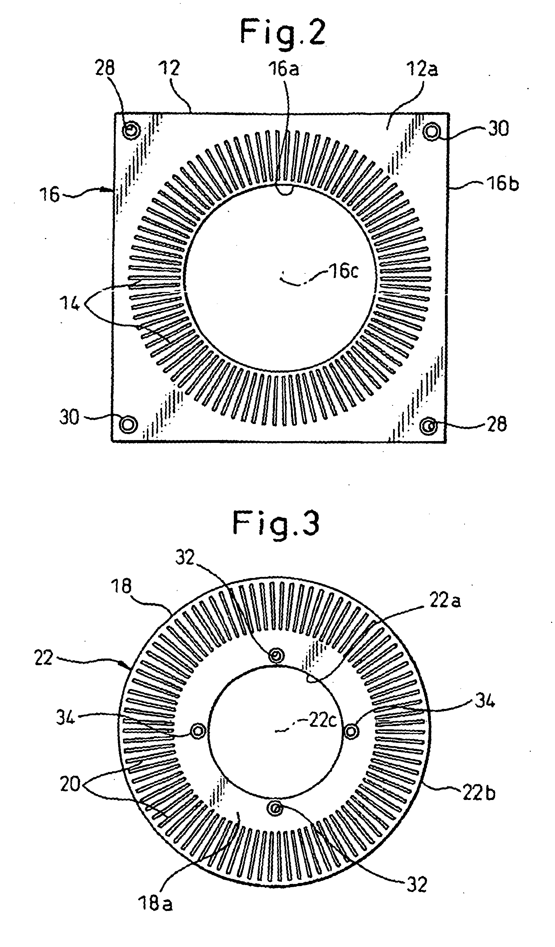

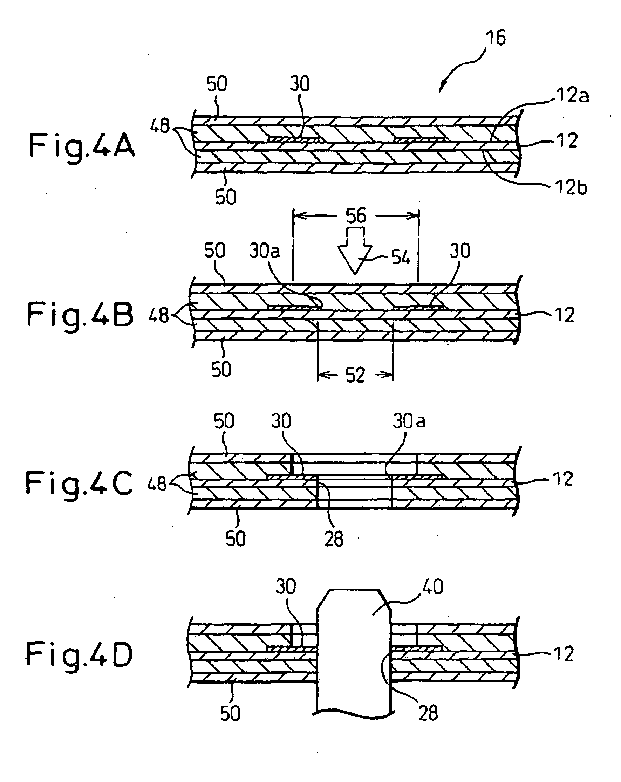

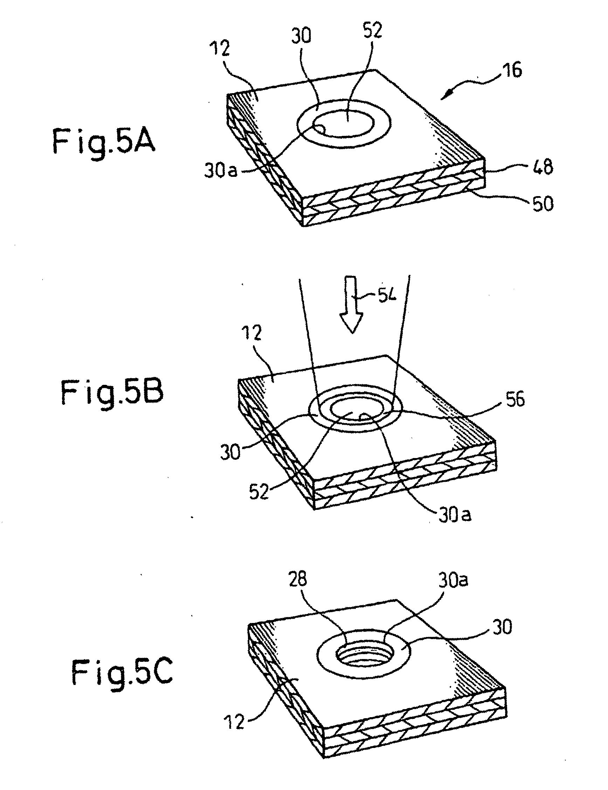

Referring to the drawings; Fig. 1 is an exploded perspective view showing the basic configuration of an electrostatic motor 10 according to an example of the present invention; Figs. 2 and 3 are plan views respectively showing two components of the electrostatic motor 10; Figs. 4A to 4D and Figs. 5A to 5C are views typically showing a manufacturing method, according to a first embodiment of the present invention, for manufacturing the electrostatic motor 10.

As shown in Fig. 1, the electrostatic motor 10 includes a stationary member 16 having a plurality of electrodes 14 disposed at regular intervals on one surface 12a of an insulating substrate 12, a movable member 22 having a plurality of electrodes 20 (Fig. 3) disposed on one surface 18a of another insulating substrate 18, a first support member 24 for supporting the stationary member 16 in a fixed manner, and a second support member 26 for supporting the movable member 22 in a manner movable relative to the stationary member 16. Each of the electrodes 14 of the stationary member 16 and each of the electrodes 20 of the movable member 22 have mutually identical shape and dimension, and the former set of electrodes 14 and the latter set of electrodes 20 are disposed at mutually identical intervals (or pitches) and arranged in the same configuration. The electrostatic motor 10 has a rotary-type configuration in which the movable member 22 rotates about an axis relative to the stationary member 16.

As shown in Fig. 2, the stationary member 16 is an annular film member having a generally circular inner circumferential edge 16a and a generally square outer circumferential edge 16b, extending concentrically about an axis 16c, and the plurality of strip-shaped electrodes 14 are provided in proximity to the inner circumferential edge 16a to extend radially about the axis 16c. At four corners near the outer circumferential edge 16b of the stationary member 16, mounting recesses 28 are respectively formed at equal distance from the axis 16c for mounting the stationary member 16 fixedly onto the first support member 24. Each mounting recess 28 is in the form of a hole having a generally circular opening and penetrating through the insulating substrate 12. Also, each mounting recess 28 is individually surrounded by a light interrupting mark 30 having an annular contour, which is locally formed on the surface 12a of the insulating substrate 12 independently of the electrodes 14. The insulating substrate 12 of the stationary member 16 is a flexible resinous film made of, e.g., polyimide resin or epoxy resin, and a large number of foil-like electrodes 14 and several (four, in the drawing) foil-like light interrupting marks 30 are formed on the substrate surface 12a, in a procedure described later, which is similar to a known process for manufacturing a printed circuit board.

As shown in Fig. 3, the movable member (i.e., a rotor) 22 is an annular film member having a generally circular inner circumferential edge 22a and a generally circular outer circumferential edge 22b, extending concentrically about an axis 22c, and the plurality of strip-shaped electrodes 20 are provided in proximity to the outer circumferential edge 22b to extend radially about the axis 22c. At four symmetric points near the inner circumferential edge 22a of the movable member 22, mounting recesses 32 for mounting the movable member 22 fixedly onto the second support member 26 are respectively formed at equal distance from the axis 22c. Each mounting recess 32 is in the form of a hole having a generally circular opening and penetrating through the insulating substrate 18. Also, each mounting recess 32 is individually surrounded by a light interrupting mark 34 having an annular contour, which is locally formed on the surface 18a of the insulating substrate 18 independently of the electrodes 20. The insulating substrate 18 of the movable member 22 is a flexible resinous film made of, e.g., polyimide resin or epoxy resin, and a large number of foil-like electrodes 20 and several (four, in the drawing) foil-like light interrupting marks 34 are formed on the substrate surface 18a, in a procedure as described later, which is similar to the known method for manufacturing a printed circuit boards.

Although not shown, insulation layers for ensuring an electrical insulation between the electrodes are formed on each of the stationary member 16 and the movable member 22, over the entire surface 12a, 18a as well as over the entire back surface opposite thereto, so as to cover the plurality of electrodes 14, 22 and the light interrupting marks 30, 34, formed on the surface 12a, 18a. These insulation layers are composed of flexible resinous films, each made of, e.g., polyimide resin or epoxy resin, and are fixedly adhered to the substrate surface 12a, 18a through, e.g., an adhesive layer. In the illustrated embodiment, the mounting recesses 28, 32 of each of the stationary member 16 and the movable member 22 are formed so as to penetrate through the insulation layers and adhesive layers.

As shown in Fig. 1, the first support member 24 for supporting the stationary member 16 is an open box-shaped member having a generally square profile as seen in a plan view, corresponding to the profile of the outer circumferential edge 16b of the stationary member 16, and includes a bottom wall 36 and a circumferential wall 38 extending along the outer circumferential edge of the bottom wall 36 in an integral manner. At four corners of the bottom wall 36 of the first support member 24 in proximity to the circumferential wall 38, upright positioning pins 40 are provided, which are adapted to be individually received in the mounting recesses 28 of the stationary member 16. Each positioning pin 40 has a generally cylindrical shape for permitting it to be fitted into a generally circular opening of the corresponding mounting recess 28 with substantially no clearance defined therebetween. Several (four, in the drawing) positioning pins 40 properly fitted into the corresponding mounting recesses 28 act to fixedly support the flexible film-like stationary member 16 in a state to be uniformly spread into an inherently flat shape.

The second support member 26 for supporting the movable member 22 includes a generally cylindrical shaft portion 42 adapted tc be received into a generally circular cavity defined by the inner circumferential edge 22a of the movable member 22 and a flange portion 44 extending radially outward in an annular shape at one axial end of the shaft portion 42 in an integral manner. At four symmetrical points around the shaft portion 42, on the flange portion 44 of the second support member 26, upright positioning pins 46 are provided, which are adapted to be individually received in the mounting recesses 32 of the movable member 22. Each positioning pin 46 has a generally cylindrical shape for permitting it to be fitted into a generally circular opening of the corresponding mounting recess 32 with substantially no clearance defined therebetween. Several (four, in the drawing) positioning pins 46 properly fitted into the corresponding mounting recesses 32 act to fixedly support the flexible film-like movable member 22 in a state to be uniformly spread into an inherently flat shape.

The first support member 24 contains, in the recessed portion thereof defined by the bottom wall 36 and the circumferential wall 38, the stationary member 16 attached to the positioning pins 40 as well as the movable member 22 attached to the positioning pins 46 of the second support member 26. The second support member 26 is mounted rotatably onto a center region of the bottom wall 36 of the first support member 24 through a bearing unit (not shown) in an orientation such that the flange portion 46 is in proximity to the bottom wall 36. The second support member 26 can rotate integrally with the movable member 22 about the axis 26a relative to the first support member 24 and the stationary member 16, in a state where the shaft portion 42 and the several (four) positioning pins 46 penetrate, in a non-contact fashion, through a generally circular cavity defined by the inner circumferential edge 16a of the stationary member 16 supported on the first support member 24 and where the positioning pins 46 are attached to the movable member 22.

In the electrostatic motor 10 having the above-described configuration, the mounting mechanism constituted by the mounting recesses 28, 32 and the positioning pins 40, 46 functions to make the stationary member 16 and the movable member 22 supported on the first support member 24 and the second support member 26 in an accurately positioned condition, respectively, in a manner that the axes 16c, 22c of the members 16, 22 coincide with the rotation axis 26a of the second support member 26 and that the electrodes 14 of the member 16 and the electrodes 20 of the member 22 are concentric with and properly opposed to each other to maximize the opposing area. As a result, when, e.g., three-phase alternating electric voltages are applied to three electrodes, arranged side-by-side, in the respective sets of electrodes 14, 20 of the stationary and movable members 16, 22, to alternately generate positive and negative electrostatic forces between the opposing electrodes 14, 20, it is possible to produce a driving force on the movable member 22 in a direction of the row of the electrodes 20 at high power and superior efficiency.

The high precision positioning function of the above-described mounting mechanism for the stationary member 16 and the movable member 22 in the electrostatic motor 10 is ensured by employing an electrostatic-motor manufacturing method, according to the present invention, possessing remarkable features mainly in the procedure of forming the mounting recess. The electrostatic-motor manufacturing method according to a first embodiment of the present invention will be described below with reference to Figs. 4A to 4D and 5A to 5C, in connection with the configuration of the stationary member 16 of the electrostatic motor 10 shown in Fig. 1. It should be noted that the electrostatic-motor manufacturing method according to the illustrated embodiment can also be applied to the movable member 22 of the electrostatic motor 10 shown in Fig. 1.

First, a plurality of electrodes 14 are formed on the surface 12a of the insulating substrate 12 and, simultaneously therewith, the light interrupting marks 30 are locally formed on the surface 12a independently of the electrodes 14, to thereby produce the stationary member 16 (Fig. 1). In this stationary-member producing step, the foil-like electrodes 14 and the foil-like light interrupting marks 30, each having a predetermined contour, may be formed simultaneously with each other, from a metal film provided in a uniform thickness on the entire surface 12a of the insulating substrate 12 through a process of patterning (using a photographic method or a screen printing method) and etching, which is similar to a known process for manufacturing a printed circuit board. According to this procedure, even if the positions of the electrodes 14 and the light interrupting marks 30 relative to the profile of the insulating substrate 12 include errors due to the technical limits of patterning and etching, it is possible to effectively and significantly reduce the relative positional error between the electrodes 14 and the light interrupting marks 30. As a result, it is possible to ensure the positional accuracy of the mounting recesses 28 formed by subsequent steps. Each of Figs. 4A and 5A shows in an enlarged manner a region around one light interrupting mark 30, thus formed in the stationary member 16. In Figs. 4A to 4D, an insulation layer 50 adhered through an adhesive layer 48 to each of the front surface 12a and the back surface 12b of the insulating substrate 12 is shown, while, in Figs. 5A to 5C, the adhesive layer 48 and the insulation layer 50 on the front surface 12a of the insulating substrate 12 are omitted.

Next, the local region 52 of the insulating substrate 12 adjacent to the light interrupting mark 30 formed on the surface 12a of the insulating substrate 12 is irradiated with light 54 (Figs. 4B and 5B), and thereby the local region 52 is removed along the edge 30a of the light interrupting mark 30 without substantially damaging the light interrupting mark 30, to provide the mounting recess 28 in the stationary member 16 (Figs. 4C and 5C). In the illustrated embodiment, the local region 52 of the insulating substrate 12 is a region inside the light interrupting mark 30 having the annular contour. This arrangement has an advantage such that the shape of the mounting recess is accurately controllable and that the light interrupting mark is readily identifiable.

In this mounting-recess forming step, as shown in Figs. 4B and 5B, the local region 52 of the insulating substrate 12 may be irradiated with a laser beam 54 having a desired power and traveling in a direction generally perpendicular to the surface 12a, so as to thermally remove the local region 52. At this time, the insulation layers 50 and the adhesive layers 48 on both sides of the insulating substrate 12 may also be locally removed, to correspond to the local region 52 of the insulating substrate 12, simultaneously with and in a manner (i.e., the irradiation of laser beam) identical to a removal of the local region 52. According to this procedure, it is possible to improve the positioning accuracy for the stationary member 16 in a state where a dielectric breakdown is surely prevented.

In the above procedure in which the local region 52 of the insulating substrate 12 is removed by the irradiation with the laser beam 54, the light interrupting mark 30 is formed from a material having a high electromagnetic reflectivity for the laser beam 54, such as a metallic material (e.g., copper) identical to the electrode 14. Also, the insulating substrate 12 is formed from a material having a high absorbency for the laser beam 54, such as polyimide resin or epoxy resin as already described. According to this arrangement, it is possible to quickly and accurately remove the local region 52. From the same point of view, the insulation layers 50 coated to the opposite surfaces of the insulating substrate 12 are made of, e.g., polyimide resin, and the adhesive layers 48 are made of, e.g., epoxy resin. In other words, as a medium for the laser beam 54, it is possible to adopt a medium (such as carbon dioxide gas) exhibiting a high reflectivity by copper and a high absorbency by polyimide resin or epoxy resin. In a case where a carbon dioxide gas laser is used, it is possible to realize a thermal removal with high efficiency.

It is preferred that not only the local region 52 of the insulating substrate 12 but also a range 56 extending beyond the edge (or the inner circumferential edge) 30a and including a part of the light interrupting mark 30 are irradiated with the laser beam 54 (Figs. 4B and 5B) . Accordingly, even if the position of irradiation of the laser beam 54 on the insulating substrate 12 includes error, it is possible to accurately remove the local region 52 along the edge 30a of the light interrupting mark 30. In this case, portions of the adhesive layer 48 and the insulation layer 50 provided on the front surface 12a of the insulating substrate 12 are removed over the irradiation range of the laser beam 54. However, a region of the insulating substrate 12, covered by the light interrupting mark 30, as well as portions of the adhesive layer 48 and the insulation layer 50 provided on the back surface 12b of the covered region, are not removed and remain as they are (Fig. 4C). Thus, according to the above procedure, the edge 30a of the light interrupting mark 30 formed through the patterning and etching process on the surface 12a of the insulating substrate 12 is not substantially deformed and defines the cylindrical contour of the mounting recess 28 penetrating through the insulating substrate 12 (as well as the adhesive layer 48 and the insulation layer 50 provided on the back surface 12b). In the case where a part of the light interrupting mark 30 is irradiated with the laser beam 54, it is desirable to design the dimension (i.e., a width of an annular piece) of the light interrupting mark 30 with adequate allowance, while previously assuming a relative error that may be caused between the position of the light interrupting mark 30 and the irradiation position of the laser beam 54.

Finally, the stationary member 16, provided with the required number of mounting recesses 28 formed through the above procedure, is mounted to the first support member 24 by using the mounting recesses 28. In other words, the required number of positioning pins 40 provided on the first support member 24 is fitted individually into the corresponding mounting recesses 28 of the stationary member 16 with substantially no clearance defined therebetween (Fig. 4D). The stationary member 16 is thereby supported on the first support member 24 in an accurately positioned state in which the axis 16c thereof coincides with the rotation axis 26a of the second support member 26 (Fig. 1). In this connection, it is possible to finish the positioning pins 40, through a conventional machining process, into dimension and shape with high accuracy. Further, in the illustrated embodiment, the insulation layer 50 adhered to the back surface 12b of the insulating substrate 12 also functions as a mechanical reinforcing layer for the insulating substrate 12 in the region of the light interrupting mark 30, so that it is possible to stably hold the stationary member 16 on the positioning pins 40.

With regard to the movable member 22, through procedures similar to the above-described procedures, the local regions of the insulating substrate 18 are accurately removed along the edges of the light interrupting marks 34 and, thereby, the mounting recesses 32 are formed with high accuracy. Then, the positioning pins 46 of the second support member 26 are tightly fitted into the corresponding mounting recesses 32, whereby the movable member 22 is supported on the second support member 26 in an accurately positioned state in which the axis 22c thereof coincides with the rotation axis 26a of the second support member 26 (Fig. 1). In this manner, an electrostatic motor 10 is completed wherein the stationary member 16 and the movable member 22 are supported on the first support member 24 and the second support member 26 in an accurately positioned state, respectively, in a manner that the electrodes 14 of the member 16 and the electrodes 20 of the member 22 are concentric with, and properly opposed to, each other to maximize the opposing area.

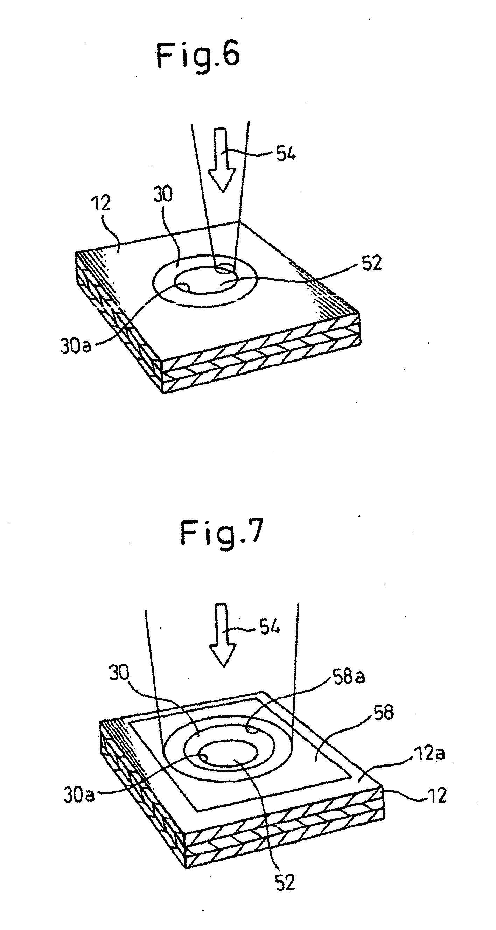

As for the above-described laser-beam irradiation step, the local region 52 of the insulating substrate 12 may be removed, not only by the procedure shown in Fig. 5B wherein the local region 52 is irradiated entirely at once, but also by the procedure shown in Fig. 6 wherein a spot area inside the local region 52 is irradiated with a focused laser beam 54 and the spot is scanned across the local region 52. According to this irradiation procedure, even if a lased unit has low power output, it is possible to rapidly remove the local region 52 by the focused laser beam 54 with high energy, and consequently, to decrease a thermal effect on a peripheral material (i.e., of the insulating substrate 12 or the light interrupting mark 30) which is not to be removed. Also, when light interrupting marks 30 having various contours are used, as will be explained later, it is possible to surely and accurately remove the local region 52 along the various edges 30a of the light interrupting marks 30 by the scanning of the focused spot of laser beam 54.

Further, in a case where the laser unit has high power output and low focusing rate, or where a relative positioning between the laser unit and the stationary member 16 or the movable member 22 has low precision, it is advantageous that the irradiation of the laser beam 54 is performed, by using a separate mask 58, as shown in Fig. 7, capable of reflecting the laser beam 54, in a state where the local region 52 is exposed, and where at least a part of the light interrupting mark 30 and the other region of the insulating substrate 12 adjacent to the light interrupting mark 30 are protected. In this case, the mask 58 is made of a material, such as metal, capable of withstanding the laser beam irradiation, and is disposed in tight contact with, or in close proximity to, the surface 12a of the insulating substrate 12 (or the insulation layer 50 thereon (Fig. 4A)). In the illustrated example, the mask 58 has a generally circular opening 58a, and acts to expose, inside the opening 58a, the entire local region 52 and a portion of the light interrupting mark 30 near the edge 30a, and to cover the remaining portion of the light interrupting mark 30 and a part of the insulating substrate 12 outside the light interrupting mark 30. In this configuration, the mask 58 is designed, in its dimensions, by assuming the actual irradiation range of the laser beam 54 onto the light interrupting mark 30, and the positional error between the mask 58 and the insulating substrate 12 is kept within the dimension (i.e., a width of an annular piece) of the light interrupting portion of the light interrupting mark 30, so that it is possible to accurately remove the local region 52 without damaging a region of the insulating substrate 12 other than the local region 52, even if the irradiation range of the laser beam 54 is deviated from or is wider than the light interrupting mark 30.

In the above procedure using the laser beam 54 as means for forming the mounting recess 28, it is required to adjust processing conditions, such as the power of the laser beam 54, etc., so as to permit the local region 52 of the insulating substrate 12 to be removed along the edge 30a of the light interrupting mark 30 without substantially damaging the light interrupting mark 30. One exemplary condition is shown by such an experiment where, for the procedure in which the laser beam 54 irradiated to a spot is suitably scanned to remove the local region 52 (Fig. 6), the stationary member 16 was produced by adhering a polyimide insulation layer 50 with 12.5 µm thickness, by using an epoxy-based adhesive layer 48, onto the opposite surfaces of a polyimide insulating substrate 12 with 25 µm thickness provided with a light interrupting mark 30 formed from a copper foil in the shape of a circular ring with 3 mm inner-diameter, and the stationary member 16 was irradiated with a carbon dioxide laser beam 54 having 10.6 µm wavelength and focused into a spot of 100µm diameter with an energy density of about 3 x 10⁹ W/m² in a manner scanning across an area 56 involving the local region 52 of the insulating substrate 12 and a part of the light interrupting mark 30 at speed of 100 mm per second. It was found as the result of the experiment that the inner diameter of the edge 30a of the light interrupting mark 30 was increased or widened by 10µm (maximum) in comparison with the inner diameter thereof before being irradiated with the laser beam. Thus, an essential requirement in the present invention that the local region 52 of the insulating substrate 12 be removed "along the edge 30a of the light interrupting mark 30 without substantially damaging the light interrupting mark 30" is intended to allow damage to this extent. As compared to the configuration in which the local region 52 of the insulating substrate 12 is removed by a machining (or a mechanical cutting and removing) process, the damage or increase in the inner diameter of the edge 30a of the light interrupting mark 30 (i.e., the inner diameter of the mounting recess 28) to the above extent is remarkably small and less significant, and thus adequately contributes to the establishment of the high-accuracy in positioning of the stationary member 16 as well as of the resultant high power output and high efficiency of the electrostatic motor 10.

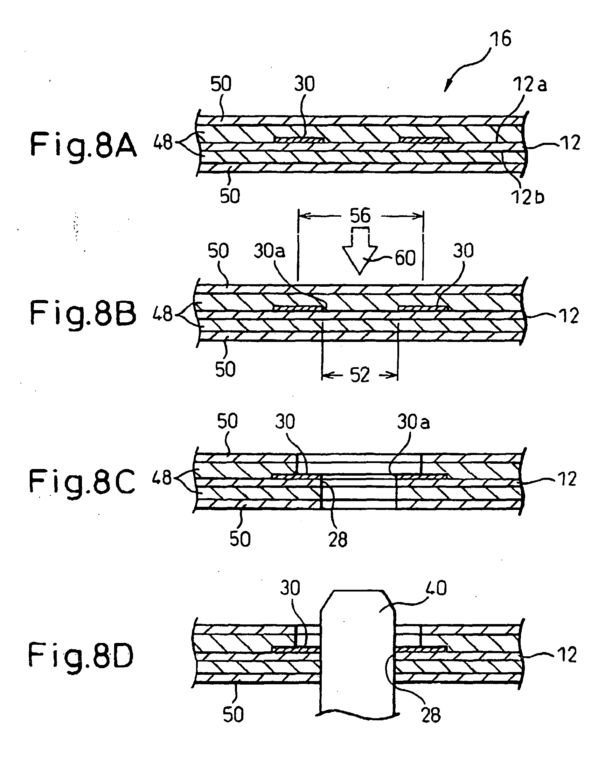

Figs. 8A to 8D show an electrostatic-motor manufacturing method according to a second embodiment of the present invention. In this embodiment, for the step of providing a mounting recess in at least one of the stationary member and the movable member, a photolithographic procedure is employed in place of the above-described thermal removal procedure using the laser beam irradiation. The other configuration is similar to that of the first embodiment and, thus, an explanation thereof is not repeated. In Figs. 8A to 8D, components corresponding respectively to the components described with reference to Figs. 4A to 4D are denoted by common reference numerals or symbols.

In the second embodiment, the insulating substrate 12 of the stationary member 16, as well as the adhesive layers 48 and the insulation layers 50, are made of a material having positive-type photosensitivity (Fig. 8A). The step of forming the mounting recess 28 includes exposing the local region 52 of the insulating substrate 12 to a light 60 with the light interrupting mark 30 being used as a mask (Fig. 8B), and thereafter chemically removing the local region 52 (Fig. 8C) by using a specified developer solution (not shown). According to this procedure, it is possible to accurately remove the local region 52 of the insulating substrate 12 while surely preventing the light interrupting mark 30 from being damaged.

As the light 60 for exposing the local region 52, ultra-violet radiation may be used, for which a photosensitive material, such as the insulating substrate 12, exhibits a high photon absorbency. Alternatively, in order to reduce an exposure time, a laser beam derived from, e.g., argon ion laser or excimer laser, or an electron beam may be used for the light 60. In any case, the light 60 differs from the laser beam 54 in the first embodiment in a point that it is used for removing the photosensitive material through a photo-chemical reaction, and therefore, the light interrupting mark 30 is not thermally damaged. Thus, according to the above procedure, the edge 30a of the light interrupting mark 30 formed, through a patterning and etching process, on the surface 12a of the insulating substrate 12 is also not substantially deformed and defines the cylindrical contour of the mounting recess 28 penetrating through the insulating substrate 12 (as well as the adhesive layer 48 and the insulation layer 50 on the back surface 12b).

Also, in the above procedure, it is advantageous that a range 56 including the local region 52 and a part of the light interrupting mark 30 are irradiated with the light 60, in order to accurately remove the local region 52 of the insulating substrate 12 along the edge 30a of the light interrupting mark 30 (Fig. 8B). In this connection, it is further effective that, prior to the immersion of the insulating substrate 12 in a developer solution after the exposing step, the insulating substrate 12 (as well as the adhesive layer 48 and the insulation layer 50) are subjected to a post-baking process, so as to create acids or radicals on the exposed portion of the photosensitive material, which act as catalysts during a reaction process with the developer solution (i.e., alkaline agent). Further, a mask 58 as shown in Fig. 7 may be used at the exposing step, so as to surely prevent a photosensitive material other than the local region 52 from being exposed.

Finally, the stationary member 16 provided with the required number of mounting recesses 28 formed through the above procedure is mounted to the first support member 24 by using the mounting recesses 28. In other words, the required number of positioning pins 40 provided on the first support member 24 is fitted individually into the corresponding mounting recesses 28 of the stationary member 16 with substantially no clearance defined therebetween (Fig. 8D). The stationary member 16 is thereby supported on the first support member 24 in an accurately positioned state in which the axis 16c thereof coincides with the rotation axis 26a of the second support member 26 (Fig. 1). In this connection, prior to the mounting operation, a post-cure process may be performed on the insulating substrate 12 as well as on the adhesive layers 48 and the insulation layers 50 to cure a material around the light interrupting mark 30, so that it is possible to further improve a positioning accuracy.

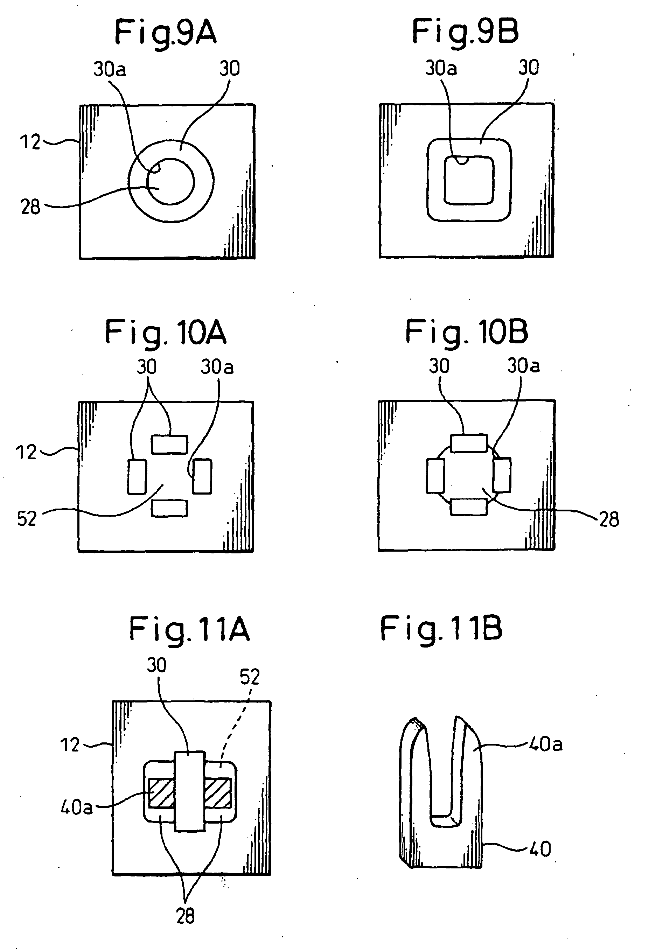

In the present invention, the light interrupting marks (30, 34) formed on the surface (12a, 18a) of the insulating substrate (12, 18) having various contour shapes may be suitably selected and adopted. For example, in the case of adopting the light interrupting mark 30 having the annular contour (Fig. 9A) as in each of the above-described embodiments, a cylindrical shape is given to the mounting recess 28 formed along the inner circumferential edge 30a of the mark, so that an easily machinable cylindrical positioning pin 40 (Fig. 1) can be adopted for the support member 24, 26. Further, in this case, it is possible to significantly reduce a clearance between the mounting recess 28 and the positioning pin 40, so as to decrease a deformation (or a stress) caused by the positioning pin 40 in a region around the mounting recess 28 of the insulating substrate 12. Also, the annular contour is generally the most easily detected shape when the position of the light interrupting mark 30 is detected by a CCD camera.

Also, as shown in Fig. 9B, the light interrupting mark 30 having a rectangular or polygonal ring-shaped contour may be employed. In this case, when a portion corresponding to one side of the polygon of the light interrupting mark 30 is oriented to be orthogonal to the direction of a driving force generated between the stationary member 16 and the movable member 22, the stress concentration caused in a region around the light interrupting mark 30 during the operation of the electrostatic motor 10 can be advantageously reduced. Further, when an operator attempts to visually recognize the light interrupting mark 30 directly, the polygonal contour is likely to be more easily recognized than the circular contour.

As shown in Figs. 10A, 10B, 11A, 11B, the contour of the light interrupting mark 30 is not limited to the hollow annular shape, but a solid contour may also be employed. In this case, the local region 52 of the insulating substrate 12 to be removed is a region outside the light interrupting mark 30. This arrangement has an advantage that the mounting recess can be formed free of the shape of the light interrupting mark.

For example, as shown in Fig. 10A, a plurality of light interrupting marks 30, each having a solid rectangular contour, may be annularly arranged to be spaced from each other. In this case, when the local region 52 surrounded by these light interrupting marks 30 are thermally or chemically removed, it is possible to form a mounting recess 28 having a generally circular contour slightly extending into an area between the adjoining light interrupting marks 30 along the edges 30a thereof, as shown in Fig. 10B. According to this arrangement, even if the residue of the removed material remains in the edge portion of the insulating substrate 12 exposed to the inner circumferential surface of the mounting recess 28, the residue is pushed into the widened area between the adjoining light interrupting marks 30 at the time of fitting the positioning pin 40 into the mounting recess 28, so that it is possible to improve a tightness of contact between the mounting recess 28 and the positioning pin 40, and thus to further improve the positioning accuracy of the stationary member 16 and the movable member 22.

Also, as shown in Fig. 11A, when the local region 52 extending in the opposite sides of a light interrupting mark 30 having a solid rectangular contour is thermally or chemically removed, it is possible to form a pair of mounting recesses 28 with the light interrupting mark 30 disposed at a center. In this case, the shape of the mounting recess 28 can be freely designed by using a separate mask, etc., provided that the portion of the insulating substrate 12 covered by the light interrupting mark 30 is not separated from the remaining portion of the substrate 12. For this mounting recess 28, a positioning pin 40 having a forked end 40a as shown in Fig. 11B may be provided, and when the portion of the insulating substrate 12 involving the light interrupting mark 30 is fitted into a space between the forked end 40a, it is possible to mount the stationary member 16 or the movable member 22 onto the first or second support member 24, 26. According to this arrangement, even if the residue of the removed material remains in the edge portion of the insulating substrate 12 exposed to the inner surface of the mounting recess 28, the residue is pushed into a clearance outside the forked end 40a defined in the mounting recess 28 at the time of fitting the positioning pin 40 into the mounting recess 28, so that it is possible to improve a tightness of contact between the portion having the light interrupting mark 30 of the insulating substrate 12 and the positioning pin 40, and thus to further improve the positioning accuracy of the stationary member 16 and the movable member 22.

In each of the above-described embodiments, the mounting recess 28 formed along the edge 30a of the light interrupting mark 30 has a form of through-hole penetrating through the insulating substrate 12. In the case where the mounting recess 28 is formed as a hole, it is possible to simplify the constitution of the positioning pin 40 provided on the first and second support member 24, 26, and thus to ensure a stable positioning function. However, in the present invention, mounting recesses having various recessed shapes other than a through-hole may be employed.

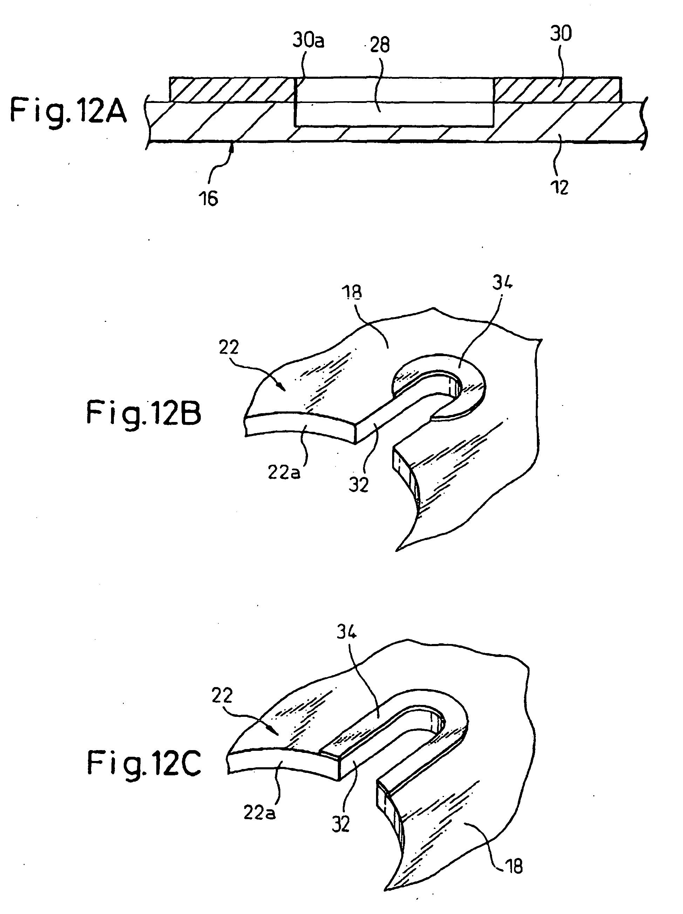

For example, as shown in Fig. 12A in connection with the stationary member 16, a mounting recess 28 formed as a bottomed depression concavely and locally provided in the surface 12a of the insulating substrate 12 may be employed. The mounting recess 28 (32) in the form of bottomed depression can be realized by suitably adjusting the processing conditions in the thermal or chemical removing procedure in the mounting-recess forming step. In this case, in place of the positioning pin 40 (46), a positioning protrusion capable of stably engaging with the mounting recess 28 (32) as the bottomed depression may be provided on the support member 24 (26). Further, as shown in Figs. 12B and 12C in connection with the movable member 22, a mounting recess 32 formed as an elongated slit cut into a desired length from the edge (the inner circumferential edge 22a of the movable member 22, in the drawing) of the insulating substrate 18 may be employed. In this case, the light interrupting mark 34 (30) may be provided only at the slotted end region of the mounting recess 32 (28) which finally receives the positioning pin 46 (40) of the support member 26 (24) (Fig. 12B), or may be provided over the entire length of the mounting recess 32 (28) (Fig. 12C).

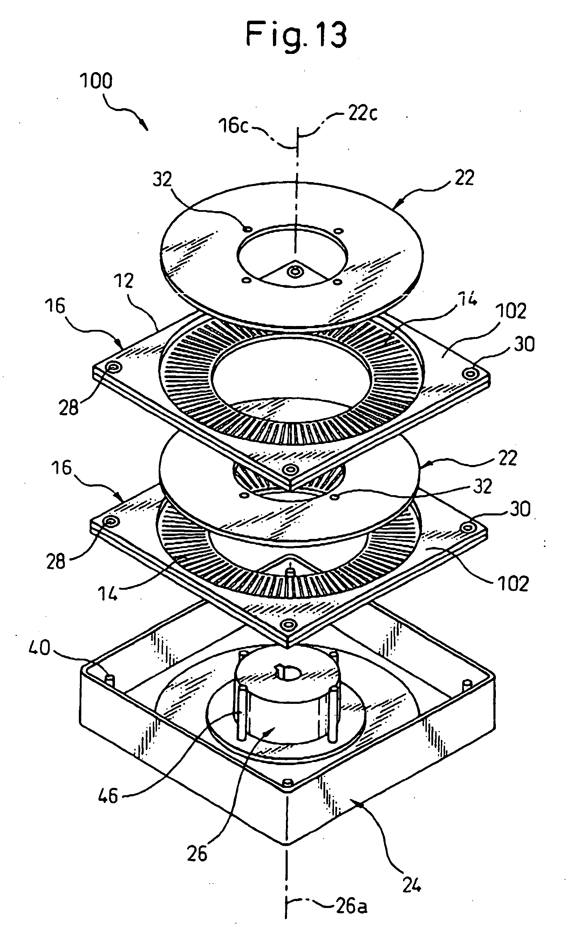

The electrostatic-motor manufacturing method according to the present invention is also applicable to a laminated-type electrostatic motor formed by alternately stacking a plurality of stationary and movable members in order to increase the net power of the motor. Fig. 13 shows a laminated-type electrostatic motor 100 according to another example of the present invention. The electrostatic motor 100 has substantially the same configuration as the electrostatic motor 10 of Fig. 1, except for the laminated or stacked structure of a plurality of stationary and movable members. Therefore, corresponding components are denoted by common reference numerals or symbols, and an explanation thereof is not repeated.

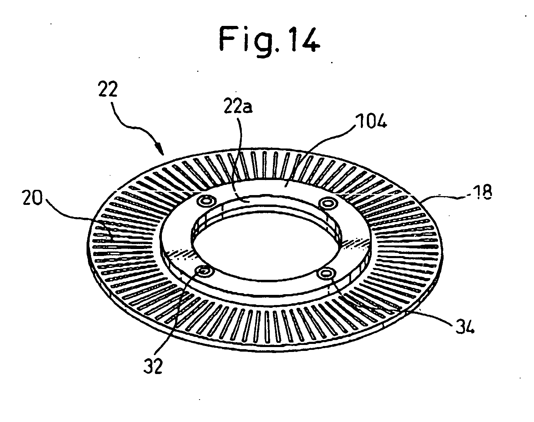

In the electrostatic motor 100, a spacer structure is provided to maintain gaps between the stacked pairs of stationary members 16 for inserting the movable members 22 into respective stationary pairs while maintaining gaps between the stacked pairs of movable members 22 for inserting the stationary members 16 into respective movable pairs. In the illustrated embodiment, the spacer structure is composed of thicker portions 102 formed in the insulating substrates 12 of the respective stationary members 16 at the outside of areas for disposing the radial electrodes 14, as well as thicker portions 104 formed in the insulating substrates 18 of the respective movable members 22 at the inside of areas for disposing the radial electrodes 20 (Fig. 14). In each stationary member 16, a plurality of mounting recesses 28 are formed as holes penetrating through the thicker portion 102 of the insulating substrate 12, as to be inside the light interrupting mark 30, in accordance with the above-described mounting-recess forming procedure of the present invention. Similarly, in each movable member 22, a plurality of mounting recesses 32 are formed as holes penetrating through the thicker portion 104 of the insulating substrate 18, as to be inside the light interrupting mark 34, in accordance with the above-described mounting-recess forming procedure of the present invention (Fig. 14).

In the above configuration, the positioning pins 40 of the first support member 24 are tightly fitted into the corresponding mounting recesses 28 of each stationary member 16 and the positioning pins 46 of the second support member 26 are tightly fitted into the corresponding mounting recesses 32 of each movable member 22, whereby the several stationary members 16 and the several movable members 22 are supported in alternately stacked arrangement on the first and second support members 24, 26, in an accurately positioned state in which the respective axes 16c, 22c coincide with the rotation axis 26a of the second support member 26. Therefore, when, e.g., three-phase alternating electric voltages are applied to three electrodes, arranged side-by-side, in the respective sets of electrodes 14, 20 of the several stationary and movable members 16, 22, to alternately generate positive and negative electrostatic forces between the opposing electrodes 14, 20, it is possible to produce a driving force on the movable members 22 in a direction of the row of the electrodes 20 at high power and superior efficiency.

The present invention is not limited to the above-described several preferred embodiments. For example, the manufacturing method according to the present invention and the mechanical configuration realized by this method are also applicable to a linear-type electrostatic motor in which a movable member linearly moves relative to a stationary member. Further, a configuration in which the mounting recess is formed in at least one of the stationary member and the movable member through the above-described light irradiation procedure should be considered as within the scope of the present invention, and according to this configuration, it is possible to remarkably and significantly improve the relative positioning accuracy between the stationary member and the movable member, as compared to the configuration in which the local region of the insulating substrate is removed through a mechanical cutting and removing process.

As apparent from the above description, according to the present invention, light irradiation is used for removing the local region of the insulating substrate, so that the edge of the light interrupting mark, formed on the surface of the insulating substrate simultaneously with the forming of the electrodes, surely defines the mounting recess provided in the insulating substrate with no substantial deformation of the edge. Therefore, it is possible to improve the accuracy in position of the mounting recess which relies upon a formation procedure, and thus to mount at least one of the stationary and movable members onto at least one of the first and second support members in an accurately positioned condition. The adoption of the light irradiating procedure eliminates the necessity of using a high-precision machine tool, and thereby makes it possible to manufacture an electrostatic motor having high power output and high efficiency at a low cost.

It should be understood that the essential constituent feature defined by a term "mounting recess" in this application means to include various recessed configurations capable of forming a difference in height relative to the other portion of the insulating substrate, such as a hole penetrating through the insulating substrate across a thickness thereof, a bottomed depression concavely formed in the surface of the insulating substrate, a slit cut into a desired length from the edge of the insulating substrate, and so on, as already described.

While the invention has been described with reference to specific preferred embodiments, it will be understood by those skilled in the art that various changes and modifications may be made thereto without departing from the scope of the following claims.

## Claims

1. A method of manufacturing an electrostatic motor (10); said electrostatic motor (10) including a stationary member (16) having a plurality of electrodes (14) disposed on one surface (12a) of an insulating substrate (12) at regular intervals, a movable member (22) having a plurality of electrodes (20) disposed on one surface (18a) of an insulating substrate (18) at regular intervals identical to the intervals of the electrodes (20) of the stationary member (16), a first support member (24) for supporting the stationary member (16)in a fixed manner, and a second support member (26) for supporting the movable member (22) in a manner movable relative to the stationary member (16); **characterized in that** said method comprising the steps of:
forming a plurality of electrodes (14, 20) on one surface (12a, 18a) of an insulating substrate (12, 18) and, simultaneously therewith, locally forming a light interrupting mark (30, 34) having a predetermined contour on said surface (12a, 18a) independently of said plurality of electrodes (14, 20), to produce at least one of said stationary member (16) and said movable member (22);
irradiating a local region (52) of said insulating substrate (12, 18) adjacent to said light interrupting mark (30, 34) formed on said surface (12a, 18a) of said insulating substrate (12, 18) with a light (54, 60), and thereby removing said local region (52) along an edge of said light interrupting mark (30, 34) without substantially damaging said light interrupting mark (30, 34), to provide a mounting recess (28, 32) in at least one of said stationary member (16) and said movable member (22); and
mounting at least one of said stationary member (16) and said movable member (22) onto at least one of said first support member (24) and said second support member (26) corresponding thereto, by using said mounting recess (28, 32) provided in at least one of said stationary member (16) and said movable member (22);
wherein the step of producing at least one of said stationary member (16) and said movable member (22) includes the step of forming said plurality of electrodes (14, 20) and said light interrupting mark (30, 34) simultaneously with each other from a metal film provided on said surface of said insulating substrate (12, 18) through a patterning and an etching, said metal film being formed from a material capable of reflecting a laser beam (54);
wherein the step of providing said mounting recess (28, 32) includes the step of irradiating said local region (52) of said insulating substrate (12, 18) with said laser beam (54) as said light (54, 60) and thereby thermally removing said local region (52);
wherein the step of producing at least one of said stationary member (16) and said movable member (22) includes the step of forming an insulation layer (50) to cover said plurality of electrodes (14, 20) and said light interrupting mark (30, 34), formed on said surface (12a, 18a) of said insulating substrate (12, 18); and
wherein the step of providing said mounting recess (28, 32) includes the step of locally removing said insulation layer (50) to correspond to said local region (52) simultaneously with and in a manner identical to a removal of said local region (52).

2. The method of manufacturing an electrostatic motor (10), as set forth in claim 1, wherein said laser beam (54) comprises carbon dioxide gas as a medium.

3. The method of manufacturing an electrostatic motor (10), as set forth in claim 1 or 2, wherein the step of irradiating said local region (52) with said laser beam (54) is performed, using a mask (58) capable of reflecting said laser beam (54), in a state where said local region (52) is exposed and where at least a part of said light interrupting mark (30, 34) and another region of said insulating substrate (12, 18) adjacent to said light interrupting mark (30, 34) are protected.

4. A method of manufacturing an electrostatic motor (10); said electrostatic motor (10) including a stationary member (16) having a plurality of electrodes (14) disposed on one surface (12a) of an insulating substrate (12) at regular intervals, a movable member (22) having a plurality of electrodes (20) disposed on one surface (18a) of an insulating substrate (18) at regular intervals identical to the intervals of the electrodes (20) of the stationary member (16), a first support member (24) for supporting the stationary member (16) in a fixed manner, and a second support member (26) for supporting the movable member (22) in a manner movable relative to the stationary member (16); **characterized in that** said method comprising the steps of
forming a plurality of electrodes (14, 20) on one surface (12a, 18a) of an insulating substrate (12, 18) and, simultaneous therewith, locally forming a light interrupting mark (30, 34) having a predetermined contour on said surface (12, 18a) independently of said plurality of electrodes (14, 20), to produce at least one of said stationary member (16) and said movable member (22);
irradiating a local region (52) of said insulating substrate (12, 18) adjacent to said light interrupting mark (30, 34) formed on said surface (12a, 18a) of said insulating substrate (12, 18) with a light (54, 60), and thereby removing said local region (52) along an edge of said light interrupting mark (30, 34) without substantially damaging said light interrupting mark (30, 34), to provide a mounting recess (28, 32) in at least one of said stationary member (16) and said movable member (22); and
mounting at least one of said stationary member (16) and said movable member (22) onto at least one of said first support member (24) and said second support member (26) corresponding thereto, by using said mounting recess (28, 32) provided in at least one of said stationary member (16) and said movable member (22);
wherein said insulating substrate (12, 18) is made of a photosensitive material;
wherein the step of providing said mounting recess (28, 32) includes exposing said local region (52) of said insulating substrate (12,18) to said light (54, 60) with said light interrupting mark (30, 34) being used as a mask and thereafter chemically removing said local region (52);
wherein the step of producing at least one of said stationary member (16) and said movable member (22) includes the step of forming an insulation layer (50) to cover said plurality of electrodes (14, 20) and said light interrupting mark (30, 34), formed on said surface (12a, 18a) of said insulating substrate (12, 18); and
wherein the step of providing said mounting recess (28, 32) includes the step of locally removing said insulation layer (50) to correspond to said local region (52) simultaneously with and in a manner identical to a removal of said local region (52).

5. The method of manufacturing an electrostatic motor (10), as set forth in any one of claims 1 to 4, wherein said predetermined contour of said light interrupting mark (30, 34) comprises an annular shape; and wherein said local region (52) comprises a region inside said light interrupting mark (30, 34).

6. The method of manufacturing an electrostatic motor (10), as set forth in any one of claims 1 to 4, wherein said predetermined contour of said light interrupting mark (30, 34) comprises a solid shape; and wherein said local region (52) comprises a region outside said light interrupting mark (30, 34).

7. The method of manufacturing an electrostatic motor (10), as set forth in any one of claims 1 to 4, wherein said mounting recess comprises a hole formed through said insulating substrate.

## Patentansprüche

1. Verfahren zur Herstellung eines elektrostatischen Motors (10), wobei der elektrostatische Motor (10) ein stationäres Element (16) mit einer Mehrzahl Elektroden (14) enthält, die auf einer Oberfläche (12a) eines isolierenden Substrats (12) in regelmäßigen Abständen angeordnet sind, ein bewegliches Element (22) mit einer Mehrzahl Elektroden (20), die auf einer Oberfläche (18a) eines isolierenden Substrats (18) in regelmäßigen Abständen gleich den Abständen der Elektroden (14) des stationären Elements (16) angeordnet sind, ein erstes Lagerungselement (24) zum Lagern des stationären Elements (16) auf eine feste Weise und eine zweites Lagerungselements (26) zum Lagern des beweglichen Elements (22) auf eine Weise, in der es relativ zum stationären Element (16) beweglich ist,
**dadurch gekennzeichnet, dass** das Verfahren die Schritte aufweist:
Bilden einer Mehrzahl Elektroden (14, 20) auf einer Oberfläche (12a, 18a) eines isolierenden Substrats (12, 18) und gleichzeitig damit lokales Ausbilden einer Lichtunterbrechungsmarke (30, 34) mit einer vorgegebenen Kontur auf dieser Oberfläche (12a, 18a) unabhängig von der Mehrzahl Elektroden (14, 20), um mindestens ein stationäres Element (16) und ein bewegliches Element (22) zu erzeugen;
Bestrahlen einer lokalen Zone (52) des isolierenden Substrats (12, 18) neben der Lichtunterbrechungsmarke (30, 34), die auf der Oberfläche 12a, 18a) des isolierenden Substrats (12, 18) ausgebildet ist, mit Licht (54, 60) und **dadurch** Entfernen der lokalen Zone (52) entlang dem Rand der Lichtunterbrechungsmarke (30, 34), ohne die Lichtunterbrechungsmarke (30, 34) nennenswert zu beschädigen, um eine Anbauausnehmung (28, 32) in mindestens entweder dem stationären Element (16) oder dem beweglichen Element (22) bereitzustellen; und
Anbringen mindestens eines stationären Elements (16) und eines beweglichen Elements (22) an mindestens entweder dem jeweils entsprechenden ersten Lagerungselement (24) oder dem zweiten Lagerungselement (26) unter Verwendung der Anbauausnehmung (28, 32), die in mindestens entweder im stationären Element (16) oder im beweglichen Element (22) bereitgestellt ist;
wobei der Schritt der Erzeugung mindestens eines stationären Elements (16) und eines beweglichen Elements (22) den Schritt der gleichzeitigen Bildung der Mehrzahl Elektroden (14, 20) und der Lichtunterbrechungsmarke (30, 34) durch Musterbildung und Ätzen aus einem Metallfilm enthält, der auf der Oberfläche des isolierenden Substrats (12, 18) vorgesehen ist, wobei der Metallfilm aus einem Material besteht, das einen Laser-Strahl (54) reflektieren kann;
wobei der Schritt der Bereitstellung der Anbauausnehmung (28, 32) den Schritt der Bestrahlung der lokalen Zone (52) des isolierenden Substrats (12, 18) mit dem Laser-Strahl (54) als dem Licht (54, 60) enthält, und **dadurch** die lokale Zone (52) thermisch entfernt wird;
wobei der Schritt der Erzeugung des mindestens einen stationären Elements (16) und des einen beweglichen Elements (22) den Schritt der Ausbildung einer Isolierschicht (50) enthält, um die Mehrzahl Elektroden (14, 20) und die Lichtunterbrechungsmarke (30, 34), die auf der Oberfläche (12a, 18a) des isolierenden Substrats (28, 32) ausgebildet sind, zu bedecken; und
wobei der Schritt der Bereitstellung der Anbauausnehmung (28, 32) den Schritt der lokalen Entfernung der Isolierschicht (50) gleichzeitig mit der und auf die gleiche Weise wie die Entfernen der lokalen Zone (52) enthält, so dass sie der lokalen Zone (52) entspricht.

2. Verfahren zur Herstellung eines elektrostatischen Motors (10) nach Anspruch 1, bei dem der Laser-Strahl (54) Kohlendioxidgas als Medium aufweist.

3. Verfahren zur Herstellung eines elektrostatischen Motors (10) nach Anspruch 1 oder 2, bei dem der Schritt der Bestrahlung der lokalen Zone (52) mit dem Laser-Strahl (54) ausgeführt wird, wobei eine Maske (58) verwendet wird, die den Laser-Strahl (54) in dem Zustand, in dem die lokale Zone (52) belichtet wird, reflektieren kann, und wobei mindestens ein Teil der Lichtunterbrechungsmarke (30, 34), und eine andere Zone des isolierenden Substrats (12, 18) neben der Lichtunterbrechungsmarke (30, 34) geschützt sind.

4. Verfahren zur Herstellung eines elektrostatischen Motors (10), wobei der elektrostatische Motor (10) ein stationäres Element (16) mit einer Mehrzahl Elektroden (14) enthält, die auf einer Oberfläche (12a) eines isolierenden Substrats (12) in regelmäßigen Abständen angeordnet sind, ein bewegliches Element (22) mit einer Mehrzahl Elektroden (20), die auf einer Oberfläche (18a) eines isolierenden Substrats (18) in regelmäßigen Abständen gleich den Abständen der Elektroden (14) des stationären Elements (16) angeordnet sind, ein erstes Lagerungselement (24) zum Lagern des stationären Elements (16) auf eine feste Weise und eine zweites Lagerungselements (26) zum Lagern des beweglichen Elements (22) auf eine Weise, in der es relativ zum stationären Element (16) beweglich ist,
**dadurch gekennzeichnet, dass** das Verfahren die Schritte aufweist:
Bilden einer Mehrzahl Elektroden (14, 20) auf einer Oberfläche (12a, 18a) eines isolierenden Substrats (12, 18) und gleichzeitig damit lokales Ausbilden einer Lichtunterbrechungsmarke (30, 34) mit einer vorgegebenen Kontur auf dieser Oberfläche (12a, 18a) unabhängig von der Mehrzahl Elektroden (14, 20), um mindestens ein stationäres Element (16) und ein bewegliches Element (22) zu erzeugen;
Bestrahlen einer lokalen Zone (52) des isolierenden Substrats (12, 18) neben der Lichtunterbrechungsmarke (30, 34), die auf der Oberfläche 12a, 18a) des isolierenden Substrats (12, 18) ausgebildet ist, mit Licht (54, 60) und **dadurch** Entfernen der lokalen Zone (52) entlang dem Rand der Lichtunterbrechungsmarke (30, 34), ohne die Lichtunterbrechungsmarke (30, 34) nennenswert zu beschädigen, um eine Anbauausnehmung (28, 32) in mindestens entweder dem stationären Element (16) oder dem beweglichen Element (22) bereitzustellen;
Anbringen mindestens eines stationären Elements (16) und eines beweglichen Elements (22) an mindestens dem jeweils entsprechenden ersten Lagerungselement (24) und dem zweiten Lagerungselement (26) unter Verwendung der Anbauausnehmung (28, 32), die in mindestens entweder in einem stationären Element (16) oder einem beweglichen Element (22) bereitgestellt ist;
wobei das isolierende Substrat (12, 18) aus einem lichtempfindlichen Material besteht;
wobei der Schritt der Bereitstellung der Anbauausnehmung (28, 32) das Belichten der lokalen Zone (52) des isolierenden Substrats (12, 18) mit dem Licht (54, 60) enthält, wobei die Lichtunterbrechungsmarke (30, 34) als Maske dient, und anschließend die lokale Zone (52) chemisch entfernt wird;
wobei der Schritt der Erzeugung mindestens eines stationären Elements (16) und eines beweglichen Elements (22) den Schritt der Ausbildung einer Isolierschicht (50) enthält, um die Mehrzahl Elektroden (14, 20) und die Lichtunterbrechungsmarke (30, 34), die auf der Oberfläche (12a, 18a) des isolierenden Substrats (28, 32) ausgebildet sind, zu bedecken; und
wobei der Schritt der Bereitstellung der Anbauausnehmung (28, 32) den Schritt der lokalen Entfernung der Isolierschicht (50) gleichzeitig mit der und auf die gleiche Weise wie die Entfernen der lokalen Zone (52) enthält, so dass sie der lokalen Zone (52) entspricht.

5. Verfahren zur Herstellung eines elektrostatischen Motors (10) nach einem der Ansprüche 1 bis 4, bei dem die vorgegebene Kontur der Lichtunterbrechungsmarke (30, 34) eine Ringform aufweist; und bei dem die lokale Zone (52) eine Zone innerhalb der Lichtunterbrechungsmarke (30, 34) aufweist.

6. Verfahren zur Herstellung eines elektrostatischen Motors (10) nach einem der Ansprüche 1 bis 4, bei dem die vorgegebene Kontur der Lichtunterbrechungsmarke (30, 34) eine Vollform aufweist; und bei dem die lokale Zone (52) eine Zone außerhalb der Lichtunterbrechungsmarke (30, 34) aufweist.

7. Verfahren zur Herstellung eines elektrostatischen Motors (10) nach einem der Ansprüche 1 bis 4, bei dem die Anbauausnehmung ein Loch aufweist, das durch das isolierende Substrat ausgebildet ist.

## Revendications

1. Procédé de fabrication d'un moteur électrostatique (10) ; ledit moteur électrostatique (10) incluant un élément stationnaire (16) comportant une pluralité d'électrodes (14) disposées sur une surface (12a) d'un substrat isolant (12) à intervalles réguliers, un élément mobile (22) comportant une pluralité d'électrodes (20) disposées sur une surface (18a) d'un substrat isolant (18) à intervalles réguliers identiques aux intervalles des électrodes (20) de l'élément stationnaire (16), un premier élément de support (24) destiné à supporter l'élément stationnaire (16) d'une manière fixe et un deuxième élément de support (26) destiné à supporter l'élément mobile (22) d'une manière mobile par rapport à l'élément stationnaire (16) ; **caractérisé en ce que** ledit procédé comprenant les étapes consistant à :
former une pluralité d'électrodes (14, 20) sur une surface (12a, 18a) d'un substrat isolant (12, 18) et, simultanément avec ceci, localement former une marque d'interruption de lumière (30, 34) possédant un contour prédéterminé sur ladite surface (12a, 18a) indépendamment de ladite pluralité d'électrodes (14, 20), pour produire au moins l'un dudit élément stationnaire (16) et dudit élément mobile (22) ;
illuminer une région locale (52) dudit substrat isolant (12, 18) adjacente à ladite marque d'interruption de lumière (30, 34) formée sur ladite surface (12a, 18a) dudit substrat isolant (12, 18) avec une lumière (54, 60), et ainsi enlever ladite région locale (52) le long d'un bord de ladite marque d'interruption de lumière (30, 34) sans substantiellement endommager ladite marque d'interruption de lumière (30, 34), pour procurer un retrait de montage (28, 32) au sein d'au moins l'un dudit élément stationnaire (16) et dudit élément mobile (22) ; et
monter au moins l'un dudit élément stationnaire (16) et dudit élément mobile (22) sur au moins l'un dudit premier élément de support (24) et dudit deuxième élément de support (26) correspondant à celui-ci, en utilisant ledit retrait de montage (28, 32) procuré dans au moins l'un dudit élément stationnaire (16) et dudit élément mobile (22) ;
dans lequel l'étape consistant à produire au moins l'un dudit élément stationnaire (16) et dudit élément mobile (22) inclut l'étape consistant à former ladite pluralité d'électrodes (14, 20) et ladite marque d'interruption de lumière (30,34) simultanément l'une avec l'autre, à partir d'un film métallique prévu sur ladite surface dudit substrat isolant (12, 18) par l'intermédiaire d'une formation de motif et d'une gravure, ledit film métallique étant formé à partir d'un matériau capable de réfléchir un faisceau laser (54) ;
dans lequel l'étape consistant à procurer ledit retrait de montage (28, 32) inclut l'étape consistant à illuminer ladite région locale (52) dudit substrat isolant (12, 18) avec ledit faisceau laser (54) en tant que ladite lumière (54, 60) et ainsi enlever thermiquement ladite région locale (52) ;
dans lequel l'étape consistant à produire au moins l'un dudit élément stationnaire (16) et dudit élément mobile (22) inclut l'étape consistant à former une couche isolante (50) destinée à couvrir ladite pluralité d'électrodes (14, 20) et ladite marque d'interruption de lumière (30, 34), formées sur ladite surface (12a, 18a) dudit support isolant (12, 18) ; et
dans lequel l'étape consistant à procurer ledit retrait de montage (28, 32) inclut l'étape consistant à enlever localement ladite couche isolante (50) pour correspondre à ladite région locale (52) simultanément avec un enlèvement de ladite région locale (52) et de manière identique à celui-ci.

2. Procédé de fabrication d'un moteur électrostatique (10), tel qu'exposé selon la revendication 1, dans lequel ledit faisceau laser (54) comprend du gaz dioxyde de carbone en tant que milieu.

3. Procédé de fabrication d'un moteur électrostatique (10), tel qu'exposé selon la revendication 1 ou 2, dans lequel l'étape consistant à illuminer ladite région locale (52) avec ledit faisceau laser (54) est réalisée, en utilisant un masque (58) capable de réfléchir ledit faisceau laser (54), dans un état où ladite région locale (52) est exposée et où au moins une partie de ladite marque d'interruption de lumière (30, 34) et une autre région dudit substrat isolant (12, 18) adjacente à ladite marque d'interruption de lumière (30, 34) sont protégées.

4. Procédé de fabrication d'un moteur électrostatique (10) ; ledit moteur électrostatique (10) incluant un élément stationnaire (16) comportant une pluralité d'électrodes (14) disposées sur une surface (12a) d'un substrat isolant (12) à intervalles réguliers, un élément mobile (22) comportant une pluralité d'électrodes (20) disposées sur une surface (18a) d'un substrat isolant (18) à intervalles réguliers identiques aux intervalles des électrodes (20) de l'élément stationnaire (16), un premier élément de support (24) destiné à supporter l'élément stationnaire (16) d'une manière fixe, et un deuxième élément de support (26) destiné à supporter l'élément mobile (22) d'une manière mobile par rapport à l'élément stationnaire (16) ; **caractérisé en ce que** ledit procédé comprenant les étapes consistant à :
former un pluralité d'électrodes (14, 20) sur une surface (12a, 18a) d'un substrat isolant (12, 18) et, simultanément avec ceci, localement former une marque d'interruption de lumière (30, 34) possédant un contour prédéterminé sur ladite surface (12a, 18a) indépendamment de ladite pluralité d'électrodes (14, 20), pour produire au moins l'un dudit élément stationnaire (16) et dudit élément mobile (22) ;
illuminer une région locale (52) dudit substrat isolant (12, 18) adjacente à ladite marque d'interruption de lumière (30, 34) formée sur ladite surface (12a, 18a) dudit substrat isolant (12, 18) avec une lumière (54, 60), et ainsi enlever ladite région locale (52) le long d'un bord de ladite marque d'interruption de lumière (30, 34) sans substantiellement endommager ladite marque d'interruption de lumière (30, 34), pour procurer un retrait de montage (28, 32) au sein d'au moins l'un dudit élément stationnaire (16) et dudit élément mobile (22) ; et
monter au moins l'un dudit élément stationnaire (16) et dudit élément mobile (22) sur au moins l'un dudit premier élément de support (24) et dudit deuxième élément de support (26) correspondant à celui-ci, en utilisant ledit retrait de montage (28, 32) procuré dans au moins l'un dudit élément stationnaire (16) et dudit élément mobile (22) ;
dans lequel ledit substrat isolant (12,18) est constitué d'un matériau photosensible ;
dans lequel l'étape consistant à procurer ledit retrait de montage (28, 32) inclut d'exposer ladite région locale (52) dudit substrat isolant (12, 18) à ladite lumière avec ladite marque d'interruption de lumière (30, 34) étant utilisée en tant que masque et par la suite enlever chimiquement ladite région locale (52) ;
dans lequel l'étape consistant à produire au moins l'un dudit élément stationnaire (16) et dudit élément mobile (22) inclut l'étape consistant à former une couche isolante (50) destinée à couvrir ladite pluralité d'électrodes (14, 20) et ladite marque d'interruption de lumière (30, 34), formées sur ladite surface (12a, 18a) dudit support isolant (12, 18) ; et
dans lequel l'étape consistant à procurer ledit retrait de montage (28, 32) inclut l'étape consistant à enlever localement ladite couche isolante (50) pour correspondre à ladite région locale (52) simultanément avec un enlèvement de ladite région locale (52) et de manière identique à celui-ci.

5. Procédé de fabrication d'un moteur électrostatique (10), tel qu'exposé selon l'une quelconque des revendications 1 à 4, dans lequel ledit contour prédéterminé de ladite marque d'interruption de lumière (30, 34) comprend une forme annulaire ; et dans lequel ladite région locale (52) comprend une région à l'intérieur de la marque d'interruption de lumière (30, 34).

6. Procédé de fabrication d'un moteur électrostatique (10), tel qu'exposé selon l'une quelconque des revendications 1 à 4, dans lequel ledit contour prédéterminé de ladite marque d'interruption de lumière (30, 34) comprend une forme pleine ; et dans lequel ladite région locale (52) comprend une région à l'extérieur de la marque d'interruption de lumière (30, 34).

7. Procédé de fabrication d'un moteur électrostatique (10), tel qu'exposé selon l'une quelconque des revendications 1 à 4, dans lequel ledit retrait de montage comprend un trou formé à travers ledit substrat isolant.
